# EUROPEAN PATENT SPECIFICATION

(11) **EP 2 495 918 B1**
(45) Date of publication and mention of the grant of the patent: **03.09.2014**
(21) Application number: 11752853.9
(22) Date of filing: 23.03.2011
(51) Int. Cl.: H04L 12/751, H04L 12/723, H04L 12/729

(54) **METHOD, SYSTEM AND NODE DEVICE FOR ESTABLISHING LABEL SWITCH PATH**
VERFAHREN, SYSTEM UND KNOTENVORRICHTUNG ZUR HERSTELLUNG EINES LABEL-SCHALTPFADES
PROCÉDÉ, SYSTÈME ET DISPOSITIF N UD POUR ÉTABLIR UN TRAJET À COMMUTATION D'ÉTIQUETTES

(30) Priority: 02.08.2010 CN 201010244482
(43) Date of publication of application: 05.09.2012
(73) Proprietor: Huawei Technologies Co., Ltd., Shenzhen, Guangdong 518129 (CN)
(72) Inventor: SUN, Jun, Shenzhen Guangdong 518129 (CN)
(74) Representative: Pfenning, Meinig & Partner GbR
(86) International application number: PCT/CN2011/072068
(87) International publication number: WO 2011/110110

(56) References cited:
- CN-A- 1 859 170
- CN-A- 101 552 717
- CN-A- 101 645 842
- US-A1- 2008 075 008
- SHIOMOTO NTT D PAPADIMITRIOU ALCATEL-LUCENT JL LE ROUX FRANCE TELECOM M VIGOUREUX ALCATEL-LUCENT D BRUNGARD AT&T K: "Requirements for GMPLS-Based Multi-Region and Multi-Layer Networks (MRN/MLN); rfc5212.txt", 20080701, 1 July 2008 (2008-07-01), XP015057207, ISSN: 0000-0003
- MARTIN VIGOUREUX ALCATEL-LUCENT KOHEI SHIOMOTO NTT CREATION DATE ATT JEAN-LOUIS LE ROUX FRANCE TELECOM: "Generalized Multi-Protocol Label Switching (GMPLS) Protocol Extensions for Multi-Layer and Multi-Region Networks (MLN/MRN); draft-ietf-ccamp-gmpls-mln-extensions-12.t xt", GENERALIZED MULTI-PROTOCOL LABEL SWITCHING (GMPLS) PROTOCOL EXTENSIONS FOR MULTI-LAYER AND MULTI-REGION NETWORKS (MLN/MRN); DRAFT-IETF-CCAMP-GMPLS-MLN-EXTENSIONS-12.T XT, INTERNET ENGINEERING TASK FORCE, IETF; STANDARDWORKINGDRAFT, INTERNET SOCIETY (I, no. 12, 22 February 2010 (2010-02-22), pages 1-25, XP015066794, [retrieved on 2010-02-22]
- MANNIE E ET AL: "Generalized Multi-Protocol Label Switching (GMPLS) Architecture; rfc3945.txt", 20041001, 1 October 2004 (2004-10-01), XP015009717, ISSN: 0000-0003
- KOMPELLA K ET AL: "Routing Extensions in Support of Generalized Multi-Protocol Label Switching (GMPLS); rfc4202.txt", 20051001, 1 October 2005 (2005-10-01), XP015054883, ISSN: 0000-0003

## Description

### FIELD OF THE INVENTION

The present invention relates to the field of communications technologies, and in particular, to a method and a system for establishing a label switched path, and a node device.

### BACKGROUND OF THE INVENTION

With the evolution of an IP-based network, various communications technologies are being gradually converged, and the network is also developing in a flattening direction. A communication network may be a hybrid network including various different switching systems, such as, a packet (Packet) switching system, a time division multiplexing (Time Division Multiplexing, TDM) switching system, and a packet-optical transport system (Packet -Optical Transport System, P-OTS).

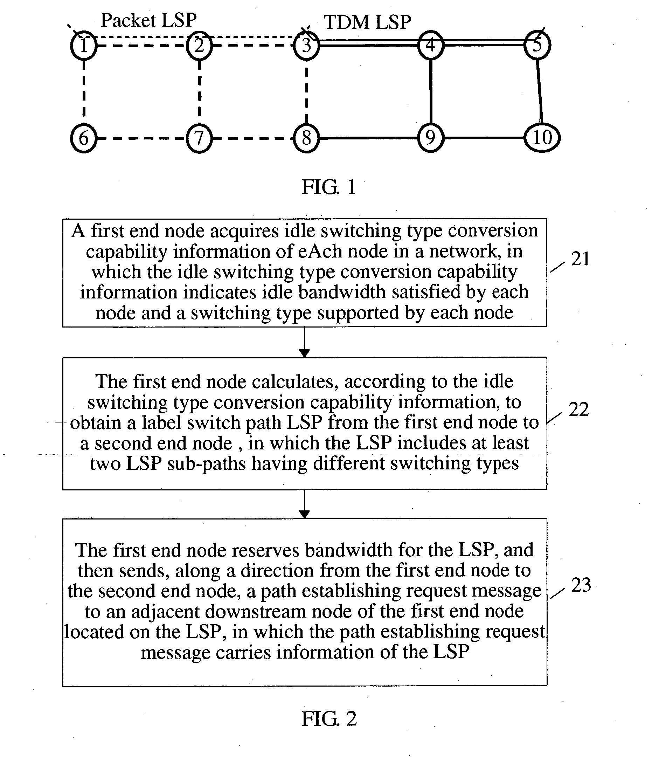

Under this network evolution background, a generalized multi-protocol label switching (Generalized Multi-Protocol Label Switching, GMPLS) technology is put forward to uniformly control various switching technologies. Referring to FIG. 1, a schematic diagram of a hybrid network formed of Packet switching and TDM switching is shown, in which, the network includes nodes from node 1 to node 10, each node is shown by a round mark in FIG. 1, a dashed line segment between nodes denotes a Packet switching link, and a solid line segment between nodes denotes a TDM switching link. In the prior art, when a label switched path (Label Switched Path, LSP) is established in the hybrid network, such as, an LSP from the node 1 to the node 5 is established, it is required to perform configuration in two stages, that is, first, an LSP based on the Packet switching from the node 1 to the node 3 is configured, and then, an LSP based on the TDM switching from the node 3 to the node 5 is configured. The node 3 or the node 8 serves as a conversion node for a switching type, and the switching type of the conversion node may be manually configured.

However, in the implementation of the present invention, it is found that the prior art has the following disadvantages. For example, in the prior art, an LSP can only be configured in a system of a single switching type; when an LSP crossing different switching types is configured in a hybrid network, multiple LSPs of a single switching type are separately configured, thereby increasing the LSP configuration workload in a hybrid network manifold. Moreover, the conversion node in the existing solution is an end node of an LSP, so when the conversion node fails, no service can be restored through a rerouting mechanism, thereby reducing the service survivability.

XP015057207, "Requirements for GMPLS-Based Multi-Region and Multi-Layer Networks (MRN/MLN); rfc5212.txt", relates to a switching technology domain defines a region, and a network of multiple switching types is referred to in this document as a multi-region network (MRN). When referring in general to a layered network, which may consist of either single or multiple regions, this document uses the term multi-layer network (MLN). This document defines a framework for GMPLS based multi-region/ multi-layer networks and lists a set of functional requirements.

XP015066794, "Generalized Multi-Protocol Label Switching (GMPLS) Protocol Extensions for Multi-Layer and Multi-Region Networks (MLN/ MBN): draft-ietf-ccamp-gmpls-mln-extensions-12.txt", relates to extensions to GMPLS routing and signaling protocols so as to support the operation of GMPLS Multi-Layer/ Multi-Region Networks. It covers the elements of a single GMPLS control plane instance controlling multiple LSP regions or layers within a single TE domain.

### SUMMARY OF THE INVENTION

In order to solve the problem existing in the prior art, embodiments of the present invention provide a method and a system for establishing a label switched path, and a node device, where the label switched path is an LSP crossing different switching types, the entire establishing procedure adopts a continuous signaling manner, and the workload of configuring an LSP in a hybrid network is significantly reduced.

In order to achieve the foregoing objectives, the embodiments of the present invention adopt the following technical solution:
A method for establishing a label switched path is provided, where the method includes:
   acquiring, by a first end node, idle switching type conversion capability information of each node in a network, in which the idle switching type conversion capability information indicates idle bandwidth satisfied by each node and a corresponding switching type supported by each node;
   calculating, by the first end node and according to the idle switching type conversion capability information, to obtain a label switched path LSP from the first end node to a second end node, in which the LSP includes at least two LSP sub-paths having different switching types;
   reserving, by the first end node, bandwidth for the LSP, and then sending, along a direction from the first end node to the second end node, a path establishing request message carrying information of the LSP to an adjacent downstream node of the first end node located on the LSP;
   receiving, by a first intermediate node, the path establishing request message; wherein the path establishing request message carries indication information of the switching type conversion node determined by the first end node according to the acquired idle switching type conversion capability information of each node in the network;
   reserving, by the first intermediate node, bandwidth for the LSP according to the path establishing request message;
   determining, by the first intermediate node and according to the path establishing request message, that the current node is a switching type conversion node, then updating the path establishing request message according to an adjacent LSP sub-path having a single switching type in a downstream, and sending, along a direction from the first end node to the second end node, an updated path establishing request message to an adjacent downstream node of the first intermediate node located on the LSP; and
   wherein the updating the path establishing request message comprises:
      setting, by the first intermediate node, the LSP encoding type in the path establishing request message to an LSP encoding type of the adjacent LSP sub-path having the single switching type in the downstream of the current node, setting the switching type in the path establishing request message to a switching type of the adjacent LSP sub-path having the single switching type in the downstream of the current node, and setting the traffic parameter in the path establishing request message to a traffic parameter of the adjacent LSP sub-path having the single switching type in the downstream of the current node.

A node device is provided, where the node device includes:
a message receiving unit, configured to receive a path establishing request message, in which the path establishing request message carries information of a label switched path LSP from a first end node to a second end node; the LSP is obtained by the first end node through calculation according to acquired idle switching type conversion capability information of each node in a network, and the LSP includes at least two LSP sub-paths having different switching types; the idle switching type conversion capability information indicates idle bandwidth satisfied by each node and a corresponding switching type supported by each node;
a bandwidth processing unit, configured to reserve bandwidth for the LSP according to the path establishing request message;
a node identification unit, configured to determine, according to the path establishing request message, that the current node is a switching type conversion node; wherein the path establishing request message carries indication information of the switching type conversion node determined by the first end node according to the acquired idle switching type conversion capability information of each node in the network;
a message updating unit, configured to update the path establishing request message according to an adjacent LSP sub-path having a single switching type in a downstream;
a message sending unit, configured to send, along a direction from the first end node to the second end node, the updated path establishing request message to an adjacent downstream node of the current node located on the LSP; and
wherein the message updating unit is specifically configured to set the LSP encoding type in the path establishing request message to an LSP encoding type of the adjacent LSP sub-path having the single switching type in the downstream of the current node, set the switching type in the path establishing request message to a switching type of the adjacent LSP sub-path having the single switching type in the downstream of the current node, and set the traffic parameter in the path establishing request message to a traffic parameter of the adjacent LSP sub-path having the single switching type in the downstream of the current node.

A system for establishing a label switched path is provided, where the system includes a first node device and at least one forgoing node device:
the first node device is configured to acquire idle switching type conversion capability information of each node in a network, in which the idle switching type conversion capability information indicates idle bandwidth satisfied by each node and a switching type supported by each node; calculate, according to the idle switching type conversion capability information, to obtain a label switched path LSP from the first node device as the first end node to a second end node, wherein the LSP includes at least two LSP sub-paths having different switching types; reserve bandwidth for the LSP; and send, along a direction from the first end node to the second end node, a path establishing request message carrying information of the LSP to an adjacent downstream node of the first end node located on the LSP.

The embodiments of the present invention provide a solution for establishing an LSP between a first end node and a second end node in a hybrid network including various switching types, the LSP established by means of the solution is an LSP crossing different switching types, the entire establishing procedure adopts a continuous signaling manner, and the workload of configuring an LSP in the hybrid network is significantly reduced. Moreover, the switching type conversion node is an intermediate node on an LSP instead of an end node, so when the switching type conversion node fails, the service can be restored through the rerouting mechanism, thereby improving the service survivability.

### BRIEF DESCRIPTION OF THE DRAWINGS

To illustrate the technical solution according to the embodiments of the present invention or in the prior art more clearly, the accompanying drawings required for describing the embodiments or the prior art are introduced below briefly. Apparently, the accompanying drawings in the following descriptions merely show some of the embodiments of the present invention, and persons skilled in the art may obtain other drawings according to the accompanying drawings without creative efforts.
FIG. 1 is a schematic structural diagram of a hybrid network in the prior art;
FIG. 2 is a schematic diagram of a method for establishing an LSP according to an embodiment of the present invention;
FIG. 3 is a schematic diagram of a method for establishing an LSP according to another embodiment of the present invention;
FIG. 4 is a schematic structural diagram of a network for establishing an LSP according to an embodiment of the present invention;
FIG. 5 is a schematic structural diagram of a node device according to an embodiment of the present invention;
FIG. 6 is a schematic structural diagram of a node device according to another embodiment of the present invention;
FIG. 7 is an example of a format of an STCCS TLV according to an embodiment of the present invention;
FIG. 8 is an example of a format of an Attribute Flags TLV according to an embodiment of the present invention; and
FIG. 9 is an example of a TLV format of payload bandwidth information according to an embodiment of the present invention.

### DETAILED DESCRIPTION OF THE EMBODIMENTS

The technical solution of the embodiments of the present invention is clearly described in the following with reference to the accompanying drawings. It is obvious that the embodiments to be described are a part rather than all of the embodiments of the present invention. All other embodiments obtained by persons skilled in the art based on the embodiments of the present invention without creative efforts shall fall within the protection scope of the present invention.

An embodiment of the present invention provides a method for establishing a label switched path, and as shown in FIG. 2, the method includes the following steps:
Step 21: A first end node acquires idle switching type conversion capability information of each node in a network, in which the idle switching type conversion capability information indicates idle bandwidth satisfied by each node and a corresponding switching type supported by each node.
Step 22: The first end node calculates, according to the idle switching type conversion capability information, to obtain a label switched path LSP from the first end node to a second end node, in which the LSP includes at least two LSP sub-paths having different switching types.
Step 23: The first end node reserves bandwidth for the LSP, and then sends, along a direction from the first end node to the second end node, a path establishing request message to an adjacent downstream node of the first end node located on the LSP, in which the path establishing request message carries information of the LSP.

For the convenience of clearly describing the technical solution of the embodiment of the present invention, in the embodiment of the present invention, the terms such as "first" and "second" are adopted to distinguish the same items or similar items with functions and effects which are basically the same, and persons skilled in the art may understand that the terms such as "first" and "second" do not limit the quantity and the execution sequence. Nodes at ends of two sides of an LSP are referred to as end nodes, and nodes on the LSP except the end nodes are referred to as intermediate nodes. For example, the first end node may be a first node, and the second end node may be a last node. Additionally, an adjacent downstream node refers to a node that is located on an LSP and connected to (or "the closest to") the first end node according to a sequence in which a path establishing request message is transferred from the first end node to the second end node. No matter whether it is an end node or intermediate node, it is required to reserve sufficient bandwidth for an LSP according to a traffic parameter of an LSP sub-path having a single switching type, and the specific operation about bandwidth reservation belongs to the prior art, which is not repeated again here. Description similar to the above description is applicable to relevant content below.

The first end node provided by the embodiment of the present invention can calculate an LSP by making use of idle switching type conversion capability information of each node, thereby ensuring successful establishment of the LSP crossing different switching types.

The embodiments of the present invention provide a solution for establishing an LSP between a first end node and a second end node in a hybrid network including various switching types, and the LSP established by means of the solution is an LSP crossing different switching types, the entire establishing procedure adopts a continuous signaling manner, and the workload of configuring an LSP in the hybrid network is significantly reduced.

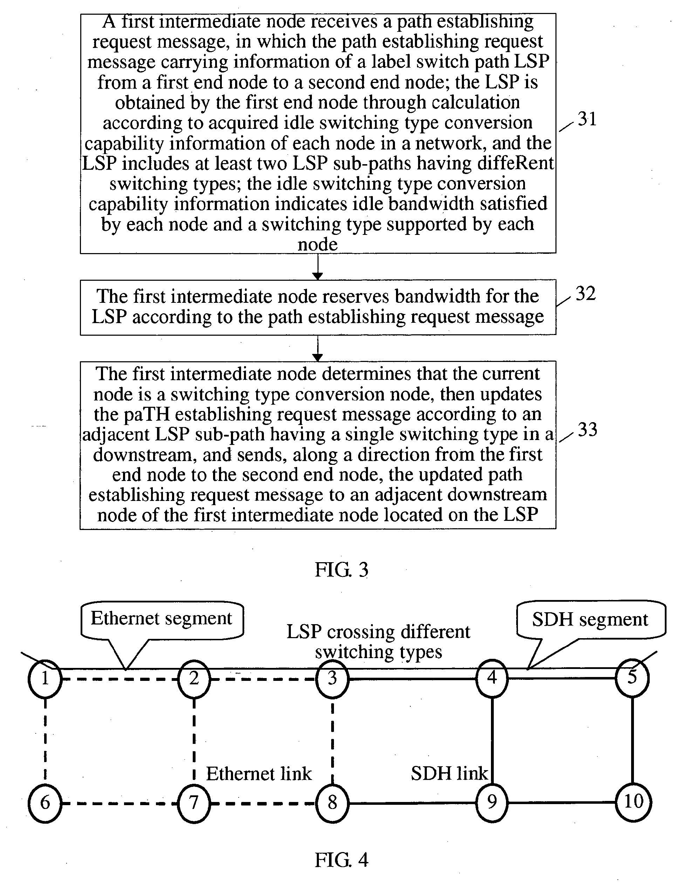

Another embodiment of the present invention provides a method for establishing a label switched path, and as shown in FIG. 3, the method includes the following steps:
Step 31: A first intermediate node receives a path establishing request message, in which the path establishing request message carries information of a label switched path LSP from a first end node to a second end node; the LSP is obtained by the first end node through calculation according to acquired idle switching type conversion capability information of each node in a network, and the LSP includes at least two LSP sub-paths having different switching types; the idle switching type conversion capability information indicates idle bandwidth satisfied by each node and a corresponding switching type supported by each node.
Step 32: The first intermediate node reserves bandwidth for the LSP according to the path establishing request message.
Step 33: The first intermediate node determines that the current node is a switching type conversion node, then updates the path establishing request message according to an adjacent LSP sub-path having a single switching type in a downstream, and sends, along a direction from the first end node to the second end node, the updated path establishing request message to an adjacent downstream node of the first intermediate node located on the LSP.

The downstream refers to that, according to a sequence in which a path establishing request message is transferred from the first end node to the second end node, a next LSP sub-path (or node) transferring a path establishing request message is located at a downstream of a previous LSP sub-path (or node) transferring a path establishing request message. The LSP sub-path of a single switching type refers to that switching types of links between nodes in the LSP sub-path are the same. The adjacent LSP sub-path refers to an LSP sub-path connected to (or "the closest to") the switching type conversion node. The adjacent downstream node refers to a node connected to (or "the closest to") the first intermediate node according to a sequence in which a path establishing request message is transferred from the first end node to the second end node, and the adjacent downstream node is located on the adjacent LSP sub-path having the single switching type in the downstream of the first intermediate node. Description similar to the above description is applicable to relevant content below.

In the embodiment of the present invention, the intermediate node located on an LSP at boundaries of different switching types is set to a switching type conversion node, and an LSP crossing different switching types is established in a continuous signaling manner by making use of the switching type conversion node.

The embodiments of the present invention provide a solution for establishing an LSP between a first end node and a second end node in a hybrid network including various switching types, the LSP established by means of the solution is an LSP crossing different switching types, the entire establishing procedure adopts a continuous signaling manner, and the workload of configuring an LSP in the hybrid network is significantly reduced. Moreover, the switching type conversion node is an intermediate node on an LSP instead of an end node, so when the switching type conversion node fails, the service can be restored through the rerouting mechanism, thereby improving the service survivability.

A method for establishing a label switched path provided in an embodiment of the present invention is illustrated in detail below. Specifically, the following processing is included:
S1: A first end node acquires idle switching type conversion capability information of each node in a network.

The node in the network can obtain the idle switching type conversion capability information of the current node; for example, in the initialization procedure of an access network, the node in the network detects the capability of the current node, and generates the idle switching type conversion capability information of the current node, and the idle switching type conversion capability information indicates the idle bandwidth satisfied by the node and the corresponding switching type supported by the node. The idle switching type conversion capability information includes, but is not limited to, an input switching type, input idle bandwidth, an output switching type and output idle bandwidth. As far as a bidirectional service is concerned, a group of information, that is, <input switching type, input idle bandwidth, output switching type, output idle bandwidth > may be referred to as an idle switching type conversion capability pair, and this only serves as a specific representation form, and does not limit the technical solution of the embodiment of the present invention. For example, when the input switching type supported by a node is Packet and the output switching type supported by a node is TDM, and the input idle bandwidth supported by the node is 1G and the output idle bandwidth supported by the node is 1G, the idle switching type conversion capability pair of the node may be denoted as: <input switching type=Packet, input idle bandwidth=1G, output switching type=TDM, output idle bandwidth=1G>. A node may have zero, one or more idle switching type conversion capability pairs. When a node has zero idle switching type conversion capability pair, that is, the node is not configured with the idle switching type conversion capability information, the node is unable to serve as a switching type conversion node on an LSP in a hybrid network.

Each node in the network may be required to have the idle switching type conversion capability information, or optionally, some nodes may be required to have the idle switching type conversion capability information, for example, only nodes at boundaries of different switching types in the hybrid network may be required to have the idle switching type conversion capability information.

In step S1, it is mainly ensured that the first end node (such as the first node) of the LSP can acquire the idle switching type conversion capability information of each node in the network, so that the first node can calculate by making use of the idle switching type conversion capability information of each node, to obtain the LSP. Multiple LSPs crossing different switching types may be established in the same hybrid network, and the selection of the first node may change according to actual requirements, so each node is configured with the switching type conversion capability information of each node in the network, thereby ensuring that the first node can acquire the idle switching type conversion capability information of each node in the network.

Further, in order to reduce the workload of the manual configuration operation, in the embodiment of the present invention, each node is first configured with the idle switching type conversion capability, and then the idle switching type conversion capability information of each node is flooded in the network through a routing protocol. In this manner, each node may automatically flood the idle switching type conversion capability information of each node into the entire network through the routing protocol, so that each node may acquire idle switching type conversion capability information of one another.

The routing protocol is expanded so as to set the idle switching type conversion capability information. Under different protocols, manners for setting the idle switching type conversion capability information are also different. Taking an open shortest path first (Open Shortest Path First, OSPF) protocol as an example, the idle switching type conversion capability pair may be encoded into a pair of interface switching capability descriptor (Interface Switching Capability Descriptor, ISCD) sub type-length-values (sub Type-Length-Values, sub_TLVs), in which, the format of the ISCD sub_TLV is defined by RFC4203. Then, one or more pairs of ISCD sub_TLVs are packed into a newly defined switching type conversion capability set (Switching Type Conversion Capability Set, STCCS) TLV, and finally are placed into the traffic engineering link state advertisement (Traffic Engineering Link State Advertisement, TE LSA) defined by RFC3630 and flooded into the entire network.

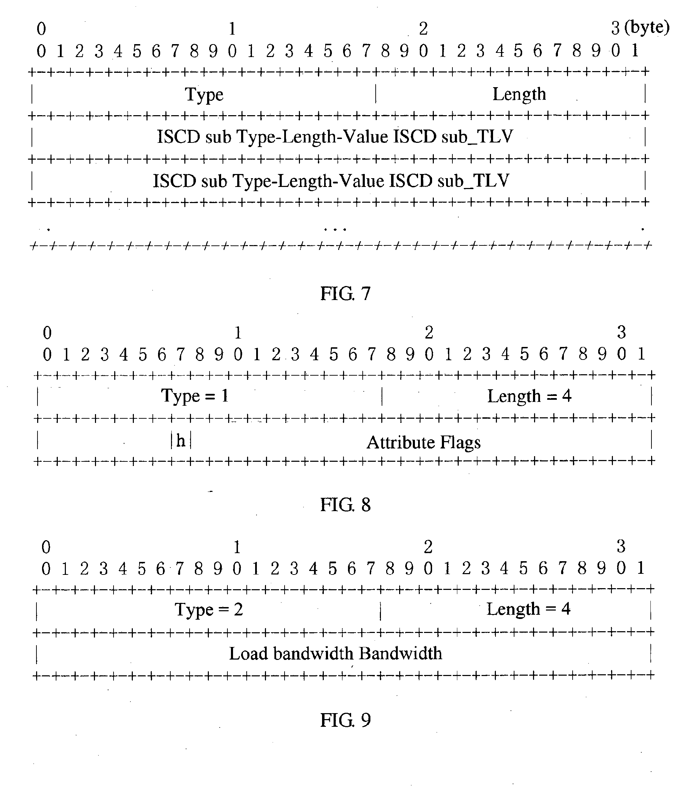

For a format of the STCCS TLV, reference may be made to FIG. 7.

S2: The first end node calculates, according to the idle switching type conversion capability information, to obtain a label switched path LSP from the first end node to a second end node, in which the LSP includes at least two LSP sub-paths having different switching types.

When it is required to establish an LSP from the first end node to the second end node in the hybrid network, it is first required to calculate the LSP. Multiple LSPs from a selected first end node to a selected second end node may be obtained through calculation, and the embodiment of the present invention does not limit the specific selection manner for the first end node and the second end node. In the embodiment of the present invention, when a routing algorithm is adopted to calculate an LSP crossing different switching types in the hybrid network, it is required to use the idle switching type conversion capability information of the node in the network as a routing constraint condition; for example, only when the idle switching type conversion capability information of the switching type conversion node on the LSP which is obtained through calculation can satisfy the bandwidth of the payload borne by the LSP, the LSP is used as the LSP obtained through calculation in the embodiment of the present invention. Referring to FIG. 4, a schematic structural diagram of a network for establishing an LSP according to an embodiment of the present invention is shown. In FIG. 4, a link shown with a dashed line belongs to the Ethernet (Ethernet), and a link shown with a solid line belongs to the synchronous digital hierarchy (Synchronous Digital Hierarchy, SDH). A node 3 and a node 8 are located at boundaries of the Ethernet and the SDH. Exemplarily, a calculated LSP from a node 1 (the first end node) to a node 5 (the second end node) is "node 1-node 2-node 3-node 4-node 5", in which, the LSP includes two LSP sub-paths having different switching types, that is, an LSP sub-path having a single switching type (Ethernet) among the node 1, the node 2 and the node 3, and an LSP sub-path having a single switching type (SDH) among the node 3, the node 4 and the node 5.

According to the idle switching type conversion capability information of the node, the switching type conversion node on the LSP is determined. For nodes located at boundaries of different switching types, such as, the node 3 and the node 8 in FIG. 4, only when the idle switching type conversion capability information of the node can satisfy bandwidth of the payload borne by the LSP, the node can be determined to be a switching type conversion node. For example, when the idle switching type conversion capability information of the node 3 can satisfy the bandwidth of the payload borne by the LSP, that is, the input idle bandwidth and the output idle bandwidth in the idle switching type conversion capability information of the node 3 are both greater than or equal to the bandwidth of the payload borne by the LSP, the node 3 is determined to be a switching type conversion node on the LSP.

S3: The first end node reserves bandwidth for the LSP, and then sends, along a direction from the first end node to the second end node, a path establishing request message to an adjacent downstream node of the first end node located on the LSP, in which the path establishing request message carries information of the LSP

The first end node (such as the first node) of the LSP may initiate the procedure of establishing the LSP crossing different switching types by making use of the path establishing request message for establishing the LSP (for example, in a manner of sending a Path message). Generally, the end node of the LSP is not selected as a switching type conversion node on the LSP, for the purpose that: when the switching type conversion node fails, the first node of the LSP may bypass the failure node through a rerouting mechanism to restore the service, thereby improving the service survivability.

S4: An intermediate node on the LSP receives the path establishing request message, and then reserves bandwidth for the LSP according to the path establishing request message. Preferably, if the intermediate node determines that the current node is a switching type conversion node, the intermediate node updates the path establishing request message according to an adjacent LSP sub-path having a single switching type in a downstream, and sends, along a direction from the first end node to the second end node, the updated path establishing request message to an adjacent downstream node of the intermediate node located on the LSP. Preferably, if the intermediate node determines that the current node is not a switching type conversion node, the intermediate node forwards, along the direction from the first end node to the second end node, the path establishing request message to the adjacent downstream node of the intermediate node located on the LSP.

An appropriate node is selected from intermediate nodes on the LSP as a switching type conversion node; for example, the first intermediate node determines, according to the received path establishing request message, that the first intermediate node is a switching type conversion node, the path establishing request message carries indication information, and the indication information indicates a determined switching type conversion node; or, after the first intermediate node receives the path establishing request message, when the first intermediate node detects to obtain that the first intermediate node is located at boundaries of different switching types and the idle switching type conversion capability of the first intermediate node satisfies the bandwidth of the payload borne by the LSP, the first intermediate node determines that the first intermediate node is a switching type conversion node.

Exemplarily, when the first intermediate node is the node 3, the node 3 may determine that the current node is a switching type conversion node through at least two manners in the following description.

### Manner 1

The node 1 (the first end node) carries indication information in a sent path establishing request message, and the indication information indicates that switching type conversion nodes on an established LSP include the node 3. According to the acquired idle switching type conversion capability information of each node in the network, the node 1 not only calculates to obtain the LSP, but also determines a switching type conversion node located on the LSP, the switching type conversion node is located at boundaries of different switching types in the network, and the idle switching type conversion capability of the switching type conversion node can satisfy the bandwidth of the payload borne by the LSP.

### Manner 2

Each node detects the network environment where the current node is located and the capability of the current node, and judges, according to a detection result, whether the current node can become a switching type conversion node. For example, when the node 3 receives the path establishing request message, and if the node 3 detects that the current node is located at boundaries of different switching types in the network and the idle switching type conversion capability of the node 3 satisfies the bandwidth of the payload borne by the LSP, the node 3 determines that the current node is a switching type conversion node.

The path establishing request message carries the information of the LSP. The information of the LSP at least includes a traffic parameter (Traffic Parameter), an explicit route object (Explicit Route Object, ERO), a generalized label request object (Generalized Label Request Object, GLRO) and an LSP attribute object. The path establishing request message may carry a new flag, and the new flag indicates that the LSP to be established from the first end node to the second end node is an LSP crossing different switching types. Additionally, the path establishing request message may further carry information of the bandwidth of the payload borne by the LSP.

The information of the LSP obtained through calculation may be carried in the explicit route object, so that each node on the LSP determines an adjacent downstream node according to the LSP obtained through calculation, and then sends the path establishing request message to the downstream node. That is to say, starting from the first end node on the LSP, along the direction from the first end node to the second end node, the path establishing request message is sent node by node, until the second end node on the LSP receives the path establishing request message.

First, the information of the LSP in the path establishing request message matches an LSP sub-path of a switching type where the first end node of the LSP is located.

Values and formats of the LSP encoding type (LSP Encoding type), the switching type (Switching Type) and the generalized payload identification (Generalized Payload Identification, G-PID), which are in the generalized label request object (GLRO), may adopt the definitions in RFC3471 and RFC3473.

The traffic parameter denotes information of bandwidth occupied by the LSP, and may adopt the SDH/SONET traffic parameter defined by RFC4606, or adopt the OTN traffic parameter defined by RFC4328, or adopt the Ethernet traffic parameter defined by draft-ietf-ccamp-ethernet-traffic-parameters.

The format of the explicit route object (ERO) is defined by RFC3473 and RFC3477. Preferably, the route information of the LSP obtained through calculation is carried through a TLV of the ERO. The indication information may be carried through a newly defined TLV of the ERO, or may be carried through a newly defined object in the information of the LSP.

The new flag may be carried through attribute flags (Attribute Flags) TLV in the LSP attribute object (LSP_ATTRIBUTES Object) defined by RFC5420; for example, the eighth bit in a 32-bit flag is used as the new flag, and is abbreviated as "h".

For the format definition of the Attribute Flags TLV, reference is made to FIG. 8.

The information of the bandwidth of the payload borne by an added LSP may also be carried through a TLV in the LSP attribute object, and optionally, for a format of an exemplary TLV of payload bandwidth (Bandwidth) information, reference is made to FIG. 9, in which the Bandwidth is encoded into a 32bite IEEE floating point number format in byte/second.

According to different manners of determining the switching type conversion node, after the intermediate node on the LSP receives the path establishing request message, specific operations are also different.

With Manner 1, an intermediate node receives the path establishing request message, and reserves bandwidth for the established LSP according to the traffic parameter in the path establishing request message, so that reserved bandwidth is not less than the bandwidth of the payload borne by the LSP, and preferably, the information of the LSP in the path establishing request message is saved; it is determined whether the current node is a switching type conversion node according to the indication information in the path establishing request message, and if the intermediate node is a switching type conversion node, details of subsequent specific operations are described below; if the intermediate node is not a switching type conversion node, the intermediate node forwards, along the direction from the first end node to the second end node, the path establishing request message to the adjacent downstream node of the intermediate node located on the LSP.

With Manner 2, an intermediate node receives the path establishing request message, and reserves bandwidth for the established LSP according to the traffic parameter in the path establishing request message, so that the reserved bandwidth is not less than the bandwidth of the payload borne by the LSP, and preferably, the information of the LSP in the path establishing request message is saved; the intermediate node detects whether the current node is located at boundaries of different switching types in the network and whether the idle switching type conversion capability can satisfy the bandwidth of the payload borne by the LSP, so as to judge whether the current node is a switching type conversion node, and when the intermediate node affirms that the current node is a switching type conversion node, details of subsequent specific operations are described below; when the intermediate node affirms that the current node is not a switching type conversion node, the intermediate node forwards, along the direction from the first end node to the second end node, the path establishing request message to the adjacent downstream node of the intermediate node located on the LSP.

When the path establishing request message is transported to establish the LSP, at the switching type conversion node, after the switching type conversion node receives the path establishing request message sent by an adjacent upstream node, the switching type conversion node reserves bandwidth for the established LSP according to the traffic parameter in the path establishing request message, and preferably, the information of the LSP in the path establishing request message is saved; according to the adjacent LSP sub-path having the single switching type in the downstream, the path establishing request message is updated, and the updated path establishing request message is sent, along the direction from the first end node to the second end node, to the adjacent downstream node of the intermediate node located on the LSP. However, multiple LSPs may be established between nodes in the network, so the switching type conversion node may be required to simultaneously support multiple hybrid LSPs, and in order to avoid mutual influence between hybrid LSPs, preferably, the switching type conversion node may check whether there is sufficient idle switching type conversion capability in the node to support the bandwidth of the payload borne by the multiple LSPs, and only when the checking is passed, the route establishing request message is updated, and the updated path establishing request message is sent to the adjacent downstream node; otherwise, it is required to return an error message to an adjacent upstream node.

When the switching type conversion node updates the path establishing request message, it is required to set the LSP encoding type (LSP Encoding type) and the switching type (Switching Type), which are in the generalized label request object of the path establishing request message, to corresponding values of the adjacent LSP sub-path having the single switching type in the downstream, but the value of the generalized payload identification (G-PID) remains unchanged. Meanwhile, it is further required to modify, according to the information of the bandwidth of the payload borne by the LSP, the traffic parameter carried in the path establishing request message into the traffic parameter of the adjacent LSP sub-path having the single switching type in the downstream as well.

S5: The second end node receives the updated path establishing request message, and then reserves bandwidth for the LSP according to the updated path establishing request message.

Specifically, an adjacent upstream node of the second end node located on the LSP sends the updated path establishing request message to the second end node. The adjacent upstream node is an intermediate node on the LSP; if the adjacent upstream node is located at boundaries of different switching types in the network, and its idle switching type conversion capability can satisfy the bandwidth of the payload borne by the LSP, the adjacent upstream node is a switching type conversion node, and the second end node connected to it is located on an LSP sub-path having a single switching type; if the adjacent upstream node is not located at the network boundaries of different switching types, that is, located in a subnetwork of the same switching type in the network, the adjacent upstream node is not a switching type conversion node, and the adjacent upstream node and the second end node are both located on an LSP sub-path of the same switching type.

According to the foregoing operation, starting from the first end node (the first node), after the path establishing request message is successfully sent to the second end node (the last node) hop by hop, preferably, starting from the second end node, a path establishing success message is returned node by node (such as, in a manner of sending a Reserve message) along the direction from the second end node to the first end node, until the first end node receives the path establishing success message.

After the LSP establishment is completed or the established LSP is deleted, the switching type conversion node through which the LSP passes is required to flood changed idle switching type conversion capability information again by making use of the routing protocol. For example, after the LSP establishment is completed, the bandwidth of the payload borne by the LSP is required to be subtracted from the input bandwidth or output bandwidth in the idle switching type conversion capability information of each node; after the established LSP is deleted, the bandwidth of the payload borne by the LSP is required to be added to the input bandwidth or output bandwidth in the idle switching type conversion capability information of each node.

The LSP established by means of the solution of the embodiment is an LSP crossing different switching types, and the entire establishing procedure adopts the continuous signaling manner, thereby significantly reducing the workload of the LSP configuration in the hybrid network. Moreover, the switching type conversion node is an intermediate node on an LSP instead of an end node, so when the switching type conversion node fails, the service can be restored through the rerouting mechanism, thereby improving the service survivability.

The technical solution of the embodiment of the present invention is illustrated through a specific example below.

Still taking the scenario shown in FIG. 4 as an example, it is assumed that bandwidth of all links in the network is 10G, an LSP to be established from the node 1 (the first end node) to the node 5 (the second end node) crossing different switching types is a bidirectional LSP with the payload being an Ethernet service and the bandwidth that are 1G, and the Ethernet/SDH switching type bidirectional conversion capability of the node 3 and the node 8 is 2G, that is, the node 3 and the node 8 both have two groups of idle switching type conversion capability pairs, that is, <input switching type=Ethernet, input idle bandwidth=2G, output switching type=SDH, output idle bandwidth=2G> and <input switching type=SDH, input idle bandwidth=2G, output switching type=Ethernet, output idle bandwidth=2G>. The following processing is included:
(1) Acquire the idle switching type conversion capability information of each node.
   Taking the node 3 as an example, the node 3 has two groups of idle switching type conversion capability pairs, which are <input switching type=Ethernet, input idle bandwidth=2G, output switching type=SDH, output idle bandwidth=2G> and <input switching type=SDH, input idle bandwidth=2G, output switching type=Ethernet, output idle bandwidth=2G> respectively. The node 3 encodes the idle switching type conversion capability pairs into a switching type conversion capability set TLV, and then floods them into the entire network through the TE LSA of an open shortest path first-traffic engineering (OSPF-TE) protocol.
   The node 1, the node 2, the node 4, the node 5, and the node 6 to the node 10 also adopt a method similar to that described above to flood the switching type conversion capability pair of the current node to the entire network, thereby ensuring that the first end node (the first node) can acquire the idle switching type conversion capability information of each node in the hybrid network. (2) The node 1 calculates a bidirectional LSP that is from the current node as the first end node (the first node) to the node 5 as the second end node (the last node) and with the payload bandwidth being 1G; the LSP includes an LSP sub-path of an Ethernet switching type and an LSP sub-path of an SDH switching type.
   The first end node (the node 1) of the LSP first calculates the LSP. The routing algorithm uses the idle switching type conversion capability of each node in the network as a new routing constraint condition during path calculation; for example, the LSP obtained through calculation based on the routing constraint condition may be "node 1-node 2-node 3-node 4-node 5".
   The idle Ethernet and SDH switching type conversion capabilities of the node 3 are 2G which is greater than the payload bandwidth of the LSP being 1G, and meanwhile, the node 3 is located at boundaries of different switching types, so the node 3 is selected as a switching type conversion node on the LSP crossing different switching types. Similarly, if the LSP obtained through calculation based on the routing constraint condition is "node 1-node 6-node 7-node 8-node 9-node 10-node 5", the node 8 may be selected as a switching type conversion node on the LSP crossing different switching types.
(3) The node 1 reserves bandwidth for the LSP, and uses the path establishing request message and adopts the continuous signaling manner to trigger a downstream node to establish an LSP. The explicit route object (Explicit Route Object) of the path establishing request message carries the information of the calculated LSP, and if the information indicates that the LSP is "node 1-node 2-node 3-node 4-node 5", the path establishing request message is forwarded node by node according to the path.
   The h bit in the attribute flag TLV of the LSP attribute object in the path establishing request message is set to 1, so as to indicate that this LSP is an LSP crossing different switching types. Additionally, the bandwidth value of the bandwidth TLV of the LSP attribute object is set to 1G. Other relevant information in the path establishing request message and the first segment of the sub-path (the LSP sub-path where the first node is located) of the established LSP are Ethernet-matched; for example, the LSP encoding type in the generalized label request object is set to the Ethernet, the switching type is set to the layer-2 switch capable (Layer-2 Switch Capable, L2SC), the G-PID is set to the Ethernet, and additionally, the traffic parameter is set to the Ethernet traffic parameter.
(4) The node 2 receives the path establishing request message, and then reserves bandwidth for the LSP according to the path establishing request message; and if it is determined that the current node is not a switching type conversion node, forwards the path establishing request message to the node 3.
(5) The node 3 receives the path establishing request message, and then reserves bandwidth for the LSP according to the path establishing request message; and if it is determined that the current node is a switching type conversion node, updates the path establishing request message according to an adjacent LSP sub-path of an SDH switching type, and then sends the updated path establishing request message to the node 4.
(6) The node 4 receives the updated path establishing request message, and then reserves bandwidth for the LSP according to the updated path establishing request message; and if it is determined that the current node is not a switching type conversion node, forwards the updated path establishing request message to the node 5.
   According to different manners of determining the switching type conversion node, after intermediate nodes (the nodes 2, 3 and 4) on the established LSP receive the path establishing request message, specific operations are also different. The node 2 and the node 3 are taken as an example to make detailed illustration respectively below.
   With Manner 1, the node 2 reserves bandwidth for the established LSP according to the Ethernet traffic parameter in the path establishing request message, the reserved bandwidth satisfies the bandwidth (1G) of the payload borne by the LSP, and preferably, the information of the LSP in the path establishing request message is saved; it is determined, according to the path establishing request message in the indication information, that the current node is not a switching type conversion node, and the path establishing request message is forwarded to the node 3.
   With Manner 2, the node 2 reserves bandwidth for the established LSP according to the Ethernet traffic parameter in the path establishing request message, the reserved bandwidth satisfies the bandwidth (1G) of the payload borne by the LSP, and preferably, the information of the LSP in the path establishing request message is saved; it is detected whether the current node is located at boundaries of different switching types in the network and whether the idle switching type conversion capability can satisfy the bandwidth of the payload borne by the LSP, and the detection result is that the idle switching type conversion capability satisfies the bandwidth of the payload borne by the LSP but the current node is not located at boundaries of different switching types in the network, so the node 2 is not a switching type conversion node, and then the path establishing request message is forwarded to the node 3.
   With Manner 1, the node 3 reserves bandwidth for the established LSP according to the Ethernet traffic parameter in the path establishing request message, the reserved bandwidth satisfies the bandwidth (1G) of the payload borne by the LSP, and preferably, the information of the LSP in the path establishing request message is saved; it is determined, according to the indication information in the path establishing request message, that the current node is a switching type conversion node, and according to an adjacent LSP sub-path of an SDH switching type, it is required to update the received path establishing request message sent from the node 2; for example, the LSP encoding type in the generalized label request object is modified from the Ethernet into the SDH, the switching type is modified from the layer-2 switch into the TDM, and the Ethernet traffic parameter is also modified into an SDH traffic parameter, but the value of the generalized payload identification (G-PID) remains unchanged; and then the node 3 sends the updated path establishing request message to the node 4 according to the information carried by the explicit route object.
   With Manner 2, the node 3 reserves bandwidth for the established LSP according to the Ethernet traffic parameter in the path establishing request message, the reserved bandwidth satisfies the bandwidth (1G) of the payload borne by the LSP, and preferably, the information of the LSP in the path establishing request message is saved; it is detected whether the current node is located at boundaries of different switching types in the network and whether the idle switching type conversion capability can satisfy the bandwidth of the payload borne by the LSP, the detection result is that the node 3 affirms that the current node is a switching type conversion node, and according to an adjacent LSP sub-path of an SDH switching type, it is required to update the received path establishing request message sent from the node 2; for example, the LSP encoding type in the generalized label request object is modified from the Ethernet into the SDH, the switching type is modified from the layer-2 switch into the TDM, the Ethernet traffic parameter is modified into an SDH traffic parameter, but the value of the generalized payload identification (G-PID) is maintained constant; the node 3 sends the updated path establishing request message to the node 4 according to the information carried by the explicit route object.
(7) The node 5 receives the updated path establishing request message, determines that the current node is the second end node, and then reserves bandwidth for the LSP according to the updated path establishing request message.

Preferably, after receiving the updated path establishing request message, the last node (the node 5) of the LSP may send a path establishing success message (such as a Reserve message) to the first node (the node 1) node by node starting from the last node (the node 5) according to a reverse direction of transferring the information protocol message (such as, "node 5-node 4-node 3-node 2-node 1"), so as to notify a node on the LSP that the LSP crossing different switching types is established successfully.

After the foregoing operation execution is finished, the establishment of the LSP crossing different switching types is completed, and because the idle switching type conversion capability of 1G of the node 3 is used, it is required to update the idle switching type conversion capability information of the node 3. Apparently, for the idle switching type conversion capability set information of the node 3, an updated result is <input switching type=Ethernet, input idle bandwidth=1G, output switching type=SDH, output idle bandwidth=1G> and <input switching type=SDH, input idle bandwidth=1G, output switching type=Ethernet, output idle bandwidth=1G>, and then update is performed in the entire network through a flooding mechanism the same as that in step (1).

The embodiments of the present invention provide a solution for establishing an LSP between a first end node and a second end node in a hybrid network including various switching types, the LSP established by means of the solution is an LSP crossing different switching types, the entire establishing procedure adopts a continuous signaling manner, and the workload of configuring and managing an LSP in the hybrid network is significantly reduced. Moreover, the switching type conversion node is an intermediate node on an LSP instead of an end node, so when the switching type conversion node fails, the service can be restored through the rerouting mechanism, thereby improving the service survivability.

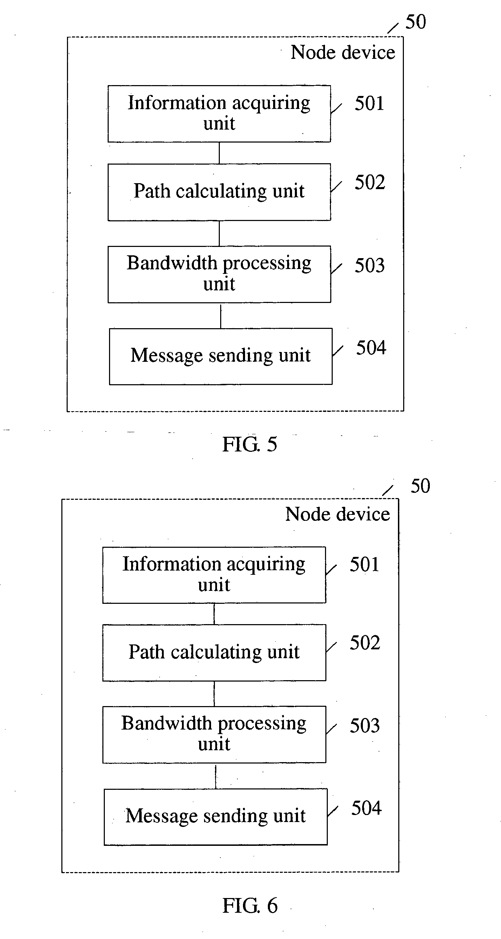

As shown in FIG. 5, another embodiment of the present invention further provides a node device 50, where the device includes:
an information acquiring unit 501, configured to acquire idle switching type conversion capability information of each node in a network, in which the idle switching type conversion capability information indicates idle bandwidth satisfied by each node and a corresponding switching type supported by each node;
a path calculating unit 502, configured to calculate, according to the idle switching type conversion capability information, to obtain a label switched path LSP from the current node as a first end node to a second end node, in which the LSP includes at least two LSP sub-paths having different switching types;
a bandwidth processing unit 503, configured to reserve bandwidth for the LSP; and
a message sending unit 504, configured to send, along a direction from the first end node to the second end node, a path establishing request message to an adjacent downstream node of the first end node located on the LSP, in which the path establishing request message carries information of the LSP.

The information acquiring unit 501 is specifically configured to receive directly configured idle switching type conversion capability information of each node, so as to acquire the idle switching type conversion capability information of the each node.

Or, the information acquiring unit 501 is specifically configured to receive idle switching type conversion capability information of each node flooded in the network through a routing protocol, so as to acquire the idle switching type conversion capability information of the each node. In this manner, a node may automatically flood idle switching type conversion capability information of the node itself into the entire network through the routing protocol, so that each node may acquire mutual idle switching type conversion capability information, thereby effectively reducing the manual operation workload.

The idle switching type conversion capability information includes, but is not limited to, an input switching type, input idle bandwidth, an output switching type and output idle bandwidth. As far as a bidirectional service is concerned, a group of information, that is, <input switching type, input idle bandwidth, output switching type, output idle bandwidth > may be referred to as an idle switching type conversion capability pair. When a node has zero idle switching type conversion capability pair, that is, the node is not configured with the idle switching type conversion capability information, the node is unable to serve as a switching type conversion node on an LSP in a hybrid network. When a node has at least one idle switching type conversion capability pair, but is not located at boundaries of different switching types in the network, the node is unable to serve as a switching type conversion node on the LSP in the hybrid network.

Further, the path establishing request message carries the information of the LSP. The information of the LSP at least includes a generalized label request object, an explicit route object, a traffic parameter, an LSP attribute object for recording a new flag and information of the bandwidth of the payload borne by the LSP; the new flag indicates that the LSP to be established is an LSP crossing different switching types; the generalized label request object includes the LSP encoding type, the switching type and the generalized payload identification.

Preferably, the node device further includes an information storage unit, configured to save the information of the LSP in the path establishing request message.

Preferably, the node device further includes a message receiving unit, configured to receive a path establishing success message returned by an adjacent downstream node of the current node on the LSP.

As shown in FIG. 6, another embodiment of the present invention further provides a node device 60, where the device includes:
a message receiving unit 601, configured to receive a path establishing request message, in which the path establishing request message carries information of a label switched path LSP from a first end node to a second end node; the LSP is obtained by the first end node through calculation according to acquired idle switching type conversion capability information of each node in a network, and the LSP includes at least two LSP sub-paths having different switching types; the idle switching type conversion capability information indicates idle bandwidth satisfied by each node and a corresponding switching type supported by each node;
a bandwidth processing unit 602, configured to reserve bandwidth for the LSP according to the path establishing request message;
a node identification unit 603, configured to determine that the current node is a switching type conversion node;
a message updating unit 604, configured to update the path establishing request message according to an adjacent LSP sub-path having a single switching type in a downstream; and
a message sending unit 605, configured to send, along a direction from the first end node to the second end node, the updated path establishing request message to an adjacent downstream node of the current node located on the LSP.

The node identification unit 603 is specifically configured to determine, according to the received path establishing request message, that the current node is a switching type conversion node, in which the path establishing request message carries indication information of the switching type conversion node determined by the first end node according to the acquired idle switching type conversion capability information of each node in the network.

Or, the node identification unit 603 is specifically configured to, after receiving the path establishing request message, detect to obtain that the current node is located at boundaries of different switching types and an idle switching type conversion capability of the current node satisfies bandwidth of the payload borne by the LSP, and determine that the current node is a switching type conversion node.

The idle switching type conversion capability information includes, but is not limited to, an input switching type, input idle bandwidth, an output switching type and output idle bandwidth. As far as a bidirectional service is concerned, a group of information, that is, <input switching type, input idle bandwidth, output switching type, output idle bandwidth > may be referred to as an idle switching type conversion capability pair. When a node has zero idle switching type conversion capability pair, that is, the node is not configured with the idle switching type conversion capability information, the node is unable to serve as a switching type conversion node on an LSP in a hybrid network. When a node has at least one idle switching type conversion capability pair, but is not located at boundaries of different switching types in the network, the node is unable to serve as a switching type conversion node on the LSP in the hybrid network.

Further, the path establishing request message carries the information of the LSP. The information of the LSP at least includes a generalized label request object, an explicit route object, a traffic parameter, an LSP attribute object for recording a new flag and information of the bandwidth of the payload borne by the LSP; the new flag indicates that the LSP to be established is an LSP crossing different switching types; the generalized label request object includes the LSP encoding type, the switching type and the generalized payload identification.

The message updating unit is specifically configured to set the LSP encoding type in the path establishing request message to an LSP encoding type of the adjacent LSP sub-path having the single switching type in the downstream of the current node, set the switching type in the path establishing request message to a switching type of the adjacent LSP sub-path having the single switching type in the downstream of the current node, and set the traffic parameter in the path establishing request message to a traffic parameter of the adjacent LSP sub-path having the single switching type in the downstream of the current node.

Preferably, the node device further includes an information storage unit, configured to save the information of the LSP in the updated path establishing request message.

Preferably, the message sending unit 605 of the node device is further configured to send a path establishing success message to an adjacent upstream node of the current node on the LSP.

Preferably, the message receiving unit 601 of the node device is further configured to receive a path establishing success message returned by an adjacent downstream node of the current node on the LSP.

Another embodiment of the present invention further provides a system for establishing a label switched path, where the system includes multiple node devices.

A first node device is configured to acquire idle switching type conversion capability information of each node in a network, in which the idle switching type conversion capability information indicates idle bandwidth satisfied by each node and a corresponding switching type supported by each node; calculate, according to the idle switching type conversion capability information, to obtain a label switched path LSP from the first node device as the first end node to a second end node, in which the LSP includes at least two LSP sub-paths having different switching types; reserve bandwidth for the LSP; and send, along a direction from the first end node to the second end node, a path establishing request message carrying information of the LSP to an adjacent downstream node of the first end node located on the LSP.

A second node device is configured to receive the path establishing request message, and reserve bandwidth for the LSP according to the path establishing request message; determine that the second node device is a switching type conversion node; update the path establishing request message according to an adjacent LSP sub-path having a single switching type in a downstream; and then send, along a direction from the first end node to the second end node, the updated path establishing request message to an adjacent downstream node of the second node device located on the LSP.

Preferably, the system further includes a third node device, configured to receive the updated path establishing request message, determine that the current node is the second end node, and reserve bandwidth for the LSP according to the updated path establishing request message.

Preferably, the system further includes a fourth node device, the fourth node device is located at a downstream of the first node device and located at an upstream of the second node device, and the fourth node device is configured to receive the path establishing request message, and then reserve bandwidth for the LSP according to the path establishing request message; and determine that the current node is not a switching type conversion node, and send, along the direction from the first end node to the second end node, the path establishing request message to an adjacent downstream node of the fourth node located on the LSP.

Preferably, the system further includes a fifth node device, the fifth node device is located at a downstream of the second node device and at an upstream of the third node device, and the fifth node device is configured to receive the updated path establishing request message, and then reserve bandwidth for the LSP according to the updated path establishing request message; and determine that the current node is not a switching type conversion node, and send, along the direction from the first end node to the second end node, the updated path establishing request message to an adjacent downstream node of the fifth node located on the LSP

Because the content such as the information interaction and execution procedure between units in the device and system embodiments is based on the same conception as that in the method embodiment of the present invention, reference may be made to the description in the method embodiment of the present invention for the specific content, which is not repeated again here. Each functional unit in the device and system embodiments of the present invention may be implemented separately, or may be integrated into one or more units and implemented.

The embodiment provides a solution for establishing an LSP between a first end node and a second end node in a hybrid network including various switching types, the LSP established by means of the solution is an LSP crossing different switching types, the entire establishing procedure adopts a continuous signaling manner, and the workload of configuring and managing an LSP in the hybrid network is significantly reduced. Moreover, the switching type conversion node is an intermediate node on LSP instead of an end node, so when the switching type conversion node fails, the service can be restored through the rerouting mechanism, thereby improving the service survivability.

Persons skilled in the art may understand that the present invention may be implemented by hardware only or by software and a necessary universal hardware platform. Based on such understandings, the technical solution under the present invention or the part that makes contributions to the prior art may be essentially embodied in the form of a software product. The software product may be stored in a storage medium, which can be a ROM/RAM, a magnetic disk, an optical disk. The software product includes a number of instructions that enable a computer device (a personal computer, a server, or a network device and so on) to execute the methods provided in the embodiments of the present invention.

The foregoing descriptions are merely several embodiments of the present invention, but not intended to limit the present invention. Various variations and modifications made by persons skilled in the art without departing from the idea of the present invention fall within the scope of the present invention. Therefore, the protection scope of the present invention falls in the appended claims.

## Claims

1. A method for establishing a label switched path, comprising:
acquiring, by a first end node, idle switching type conversion capability information of each node in a network, wherein the idle switching type conversion capability information indicates idle bandwidth satisfied by each node and a switching type supported by each node (21);
calculating, by the first end node and according to the idle switching type conversion capability information, to obtain a label switched path LSP from the first end node to a second end node, wherein the LSP comprises at least two LSP sub-paths having different switching types (22);
reserving, by the first end node, bandwidth for the LSP, and then sending, along a direction from the first end node to the second end node, a path establishing request message carrying information of the LSP to an adjacent downstream node of the first end node located on the LSP (23);
receiving, by a first intermediate node, the path establishing request message (31); wherein the path establishing request message carries indication information of the switching type conversion node determined by the first end node according to the acquired idle switching type conversion capability information of each node in the network;
reserving, by the first intermediate node, bandwidth for the LSP according to the path establishing request message (32);
determining, by the first intermediate node and according to the path establishing request message, that a current node is a switching type conversion node, then updating the path establishing request message according to an adjacent LSP sub-path having a single switching type in a downstream, and sending, along a direction from the first end node to the second end node, an updated path establishing request message to an adjacent downstream node of the first intermediate node located on the LSP (33); and
wherein the updating the path establishing request message comprises:
setting, by the first intermediate node, the LSP encoding type in the path establishing request message to an LSP encoding type of the adjacent LSP sub-path having the single switching type in the downstream of the current node, setting the switching type in the path establishing request message to a switching type of the adjacent LSP sub-path having the single switching type in the downstream of the current node, and setting the traffic parameter in the path establishing request message to a traffic parameter of the adjacent LSP sub-path having the single switching type in the downstream of the current node.

2. The method according to claim 1, wherein the acquiring, by the first end node, the idle switching type conversion capability information of a node in the network comprises:
receiving, by the first end node, directly configured idle switching type conversion capability information of each node, so as to acquire the idle switching type conversion capability information of the each node; or
receiving, by the first end node, idle switching type conversion capability information of each node flooded in the network through a routing protocol, so as to acquire the idle switching type conversion capability information of the each node.

3. The method according to claim 1 or 2, wherein the information of the LSP at least comprises a generalized label request object, an explicit route object, a traffic parameter, and an LSP attribute object for recording a new flag and bandwidth information of a payload borne by the LSP; the new flag indicates that an LSP to be established is an LSP crossing different switching types.

4. The method according to claim 1 or 2, wherein the idle switching type conversion capability information comprises an input switching type, input idle bandwidth, an output switching type and output idle bandwidth.

5. A node device, comprising:
a message receiving unit (601), configured to receive a path establishing request message, wherein the path establishing request message carries information of a label switched path LSP from a first end node to a second end node; the LSP is obtained by the first end node through calculation according to acquired idle switching type conversion capability information of each node in a network, and the LSP comprises at least two LSP sub-paths having different switching types; the idle switching type conversion capability information indicates idle bandwidth satisfied by each node and a switching type supported by each node;
a bandwidth processing unit (602), configured to reserve bandwidth for the LSP according to the path establishing request message;
a node identification unit (603), configured to determine, according to the path establishing request message, that a current node is a switching type conversion node; wherein the path establishing request message carries indication information of the switching type conversion node determined by the first end node according to the acquired idle switching type conversion capability information of each node in the network;
a message updating unit (604), configured to update the path establishing request message according to an adjacent LSP sub-path having a single switching type in a downstream;
a message sending unit (605), configured to send, along a direction from the first end node to the second end node, an updated path establishing request message to an adjacent downstream node of the current node located on the LSP; and
wherein the message updating unit (604) is specifically configured to set the LSP encoding type in the path establishing request message to an LSP encoding type of the adjacent LSP sub-path having the single switching type in the downstream of the current node, set the switching type in the path establishing request message to a switching type of the adjacent LSP sub-path having the single switching type in the downstream of the current node, and set the traffic parameter in the path establishing request message to a traffic parameter of the adjacent LSP sub-path having the single switching type in the downstream of the current node.

6. The node device according to claim 5, wherein the information of the LSP at least comprises a generalized label request object, an explicit route object, a traffic parameter, and an LSP attribute object for recording a new flag and bandwidth information of a payload borne by the LSP; the new flag indicates that an LSP to be established is an LSP crossing different switching types.

7. The node device according to claim 5, wherein the idle switching type conversion capability information comprises an input switching type, input idle bandwidth, an output switching type and output idle bandwidth.

8. A system for establishing a label switched path, comprising a first node device and at least one node device according to any one of claims 5 to 7:
the first node device is configured to acquire idle switching type conversion capability information of each node in a network, in which the idle switching type conversion capability information indicates idle bandwidth satisfied by each node and a switching type supported by each node; calculate, according to the idle switching type conversion capability information, to obtain a label switched path LSP from the first node device as the first end node to a second end node, wherein the LSP includes at least two LSP sub-paths having different switching types; reserve bandwidth for the LSP; and send, along a direction from the first end node to the second end node, a path establishing request message carrying information of the LSP to an adjacent downstream node of the first end node located on the LSP.

## Patentansprüche

1. Verfahren zum Aufbauen eines Etikettvermittlungspfads, das Folgendes umfasst:
Erfassen von Informationen über freie Vermittlungstypumsetzungsfähigkeiten jedes Knotens in einem Netz durch einen ersten Endknoten, wobei die Informationen über freie Vermittlungstypumsetzungsfähigkeiten freie Bandbreite, die durch jeden Knoten erfüllt wird, und einen Vermittlungstyp, der durch jeden Knoten unterstützt wird, angeben (21);
Berechnen durch den ersten Endknoten und gemäß den Informationen über freie Vermittlungstypumsetzungsfähigkeiten, um einen Etikettvermittlungspfad (label switched path, LSP) von dem ersten Endknoten zu einem zweiten Endknoten zu erhalten, wobei der LSP wenigstens zwei LSP-Teilpfade enthält, die unterschiedliche Vermittlungstypen aufweisen (22);
Reservieren von Bandbreite für den LSP durch den ersten Endknoten und dann Senden entlang einer Richtung von dem ersten Endknoten zu dem zweiten Endknoten einer Pfadaufbauanforderungsnachricht, die Informationen des LSP führt,
zu einem benachbarten netzabwärts gelegenen Knoten des ersten Endknotens, der sich auf dem LSP befindet (23);
Empfangen der Pfadaufbauanforderungsnachricht (31) durch einen ersten Zwischenknoten; wobei die Pfadaufbauanforderungsnachricht Angabeinformationen des durch den ersten Endknoten gemäß den erfassten Informationen über freie Vermittlungstypumsetzungsfähigkeiten jedes Knotens in dem Netz bestimmten Vermittlungstypumsetzungsknotens führt;
Reservieren von Bandbreite für den LSP durch den ersten Zwischenknoten gemäß der Pfadaufbauanforderungsnachricht (32);
Bestimmen durch den ersten Zwischenknoten und gemäß der Pfadaufbauanforderungsnachricht, dass ein aktueller Knoten ein Vermittlungstypumsetzungsknoten ist, dann Aktualisieren der Pfadaufbauanforderungsnachricht gemäß einem benachbarten LSP-Teilpfad, der netzabwärts einen einzelnen Vermittlungstyp aufweist, und Senden entlang einer Richtung von dem ersten Endknoten zu dem zweiten Endknoten einer aktualisierten Pfadaufbauanforderungsnachricht zu einem netzabwärts gelegenen benachbarten Knoten des ersten Zwischenknotens, der sich auf dem LSP befindet (33); und
wobei das Aktualisieren der Pfadaufbauanforderungsnachricht Folgendes umfasst:
Einstellen des LSP-Codierungstyps in der Pfadaufbauanforderungsnachricht durch den ersten Zwischenknoten auf einen LSP-Codierungstyp des benachbarten LSP-Teilpfads, der den einzelnen Vermittlungstyp netzabwärts des aktuellen Knotens aufweist, Einstellen des Vermittlungstyps in der Pfadaufbauanforderungsnachricht auf einen Vermittlungstyp des benachbarten LSP-Teilpfads, der den einzelnen Vermittlungstyp netzabwärts des aktuellen Knotens aufweist, und Einstellen des Verkehrsparameters in der Pfadaufbauanforderungsnachricht auf einen Verkehrsparameter des benachbarten LSP-Teilpfads, der den einzelnen Vermittlungstyp netzabwärts des aktuellen Knotens aufweist.

2. Verfahren nach Anspruch 1, wobei das Erfassen der Informationen über freie Vermittlungstypumsetzungsfähigkeiten eines Knotens in dem Netz durch den ersten Endknoten Folgendes umfasst:
Empfangen direkt konfigurierter Informationen über freie Vermittlungstypumsetzungsfähigkeiten jedes Knotens durch den ersten Endknoten,
um die Informationen über freie Vermittlungstypumsetzungsfähigkeiten jedes Knotens zu erfassen; oder
Empfangen von Informationen über freie Vermittlungstypumsetzungsfähigkeiten jedes Knotens, die durch ein Lenkungsprotokoll in dem Netz verbreitet werden,
durch den ersten Endknoten, um die Informationen über freie Vermittlungstypumsetzungsfähigkeiten jedes Knotens zu erfassen.

3. Verfahren nach Anspruch 1 oder 2, wobei die Informationen über den LSP wenigstens ein verallgemeinertes Etikettenanforderungsobjekt, ein explizites Lenkungsobjekt, einen Verkehrsparameter und ein LSP-Attributobjekt zum Aufzeichnen eines neuen Flags und Bandbreiteninformationen von Nutzdaten, die durch den LSP getragen werden, umfassen; wobei das neue Flag angibt, dass ein LSP, der aufgebaut werden soll, ein LSP ist, der unterschiedliche Vermittlungstypen durchläuft.

4. Verfahren nach Anspruch 1 oder 2, wobei die Informationen über freie Vermittlungstypumsetzungsfähigkeiten einen Eingangsvermittlungstyp, freie Eingangsbandbreite, einen Ausgangsvermittlungstyp und freie Ausgangsbandbreite umfassen.

5. Knotenvorrichtung, die Folgendes umfasst:
eine Nachrichtenempfangseinheit (601), die konfiguriert ist, eine Pfadaufbauanforderungsnachricht zu empfangen, wobei die Pfadaufbauanforderungsnachricht Informationen über einen Etikettvermittlungspfad LSP von einem ersten Endknoten zu einem zweiten Endknoten führt; der LSP durch den ersten Endknoten durch Berechnung gemäß erfasster Informationen über freie Vermittlungstypumsetzungsfähigkeiten jedes Knotens in einem Netz erhalten wird, und der LSP wenigstens zwei LSP-Teilpfade umfasst, die unterschiedliche Vermittlungstypen aufweisen; die Informationen über freie Vermittlungstypumsetzungsfähigkeiten freie Bandbreite, die durch jeden Knoten erfüllt wird, und einen Vermittlungstyp, der durch jeden Knoten unterstützt wird,
angeben;
eine Bandbreitenverarbeitungseinheit (602), die konfiguriert ist, Bandbreite für den LSP gemäß der Pfadaufbauanforderungsnachricht zu reservieren;
eine Knotenidentifikationseinheit (603), die konfiguriert ist, gemäß der Pfadaufbauanforderungsnachricht zu bestimmen, dass ein aktueller Knoten ein Vermittlungstypumsetzungsknoten ist; wobei die Pfadaufbauanforderungsnachricht Angabeinformationen des durch den ersten Endknoten gemäß den erfassten Informationen über freie Vermittlungstypumsetzungsfähigkeiten jedes Knotens in dem Netz bestimmten Vermittlungstypumsetzungsknotens führt;
eine Nachrichtenaktualisierungseinheit (604), die konfiguriert ist, die Pfadaufbauanforderungsnachricht gemäß einem benachbarten LSP-Teilpfad, der einen einzelnen Vermittlungstyp netzabwärts aufweist, zu aktualisieren;
eine Nachrichtensendeeinheit (605), die konfiguriert ist, längs einer Richtung von dem ersten Endknoten zu dem zweiten Endknoten eine aktualisierte Pfadaufbauanforderungsnachricht zu einem benachbarten netzabwärts gelegenen Knoten des aktuellen Knotens, der sich in dem LSP befindet, zu senden; und
wobei die Nachrichtenaktualisierungseinheit (604) spezifisch konfiguriert ist, den LSP-Codierungstyp in der Pfadaufbauanforderungsnachricht auf einen LSP-Codierungstyp des benachbarten LSP-Teilpfads, der den einzelnen Vermittlungstyp netzabwärts des aktuellen Knotens aufweist, einzustellen, den Vermittlungstyp in der Pfadaufbauanforderungsnachricht auf einen Vermittlungstyp des benachbarten LSP-Teilpfads, der den einzelnen Vermittlungstyp netzabwärts des aktuellen Knotens aufweist, einzustellen und den Verkehrsparameter in der Pfadaufauanforderungsnachricht auf einen Verkehrsparameter des benachbarten LSP-Teilpfads, der den einzelnen Vermittlungstyp netzabwärts des aktuellen Knotens aufweist, einzustellen.

6. Knotenvorrichtung nach Anspruch 5, wobei die Informationen über den LSP wenigstens ein verallgemeinertes Etikettenanforderungsobjekt, ein explizites Lenkungsobjekt, einen Verkehrsparameter und ein LSP-Attributobjekt zum Aufzeichnen eines neuen Flags und Bandbreiteninformationen von Nutzdaten, die durch den LSP getragen werden, umfassen; wobei das neue Flag angibt, dass ein LSP, der aufgebaut werden soll, ein LSP ist, der unterschiedliche Vermittlungstypen durchläuft.

7. Knotenvorrichtung nach Anspruch 5, wobei die Informationen über freie Vermittlungstypumsetzungsfähigkeiten einen Eingangsvermittlungstyp, freie Eingangsbandbreite, einen Ausgangsvermittlungstyp und freie Ausgangsbandbreite umfassen.

8. System zum Aufbauen eines Etikettvermittlungspfads, das eine erste Knotenvorrichtung und wenigstens eine Knotenvorrichtung nach einem der Ansprüche 5 bis 7 umfasst:
wobei die erste Knotenvorrichtung konfiguriert ist, Informationen über freie Vermittlungstypumsetzungsfähigkeiten jedes Knoten in einem Netz zu erfassen,
wobei die Informationen über freie Vermittlungstypumsetzungsfähigkeiten freie Bandbreite, die durch jeden Knoten erfüllt wird, und einen Vermittlungstyp, der durch jeden Knoten unterstützt wird, angeben; gemäß den Informationen über freie Vermittlungstypumsetzungsfähigkeiten zu berechnen, um einen Etikettvermittlungspfad LSP von der ersten Knotenvorrichtung als dem ersten Endknoten zu einem zweiten Endknoten zu erhalten, wobei der LSP wenigstens zwei LSP-Teilpfade, die unterschiedliche Vermittlungstypen aufweisen, enthält;
Bandbreite für den LSP zu reservieren; und längs einer Richtung von dem ersten Endknoten zu dem zweiten Endknoten eine Pfadaufbauanforderungsnachricht, die Informationen über den LSP führt, zu einem benachbarten netzabwärts gelegenen Knoten des ersten Endknotens, der sich auf dem LSP befindet, zu senden.

## Revendications

1. Procédé d'établissement d'un trajet à commutation d'étiquettes, comprenant :
l'acquisition, par un premier noeud d'extrémité, d'informations de capacité de conversion de type de commutation de repos de chaque noeud dans un réseau, dans lequel les informations de capacité de conversion de type de commutation de repos indiquent une largeur de bande de repos satisfaite par chaque noeud et un type de commutation pris en charge par chaque noeud (21) ;
le calcul, par le premier noeud d'extrémité et conformément aux informations de capacité de conversion de type de commutation de repos, destiné à obtenir un trajet à commutation d'étiquettes LSP (Label Switched Path) du premier noeud d'extrémité à un second noeud d'extrémité, dans lequel le LSP comprend au moins deux sous-trajets LSP ayant des types de commutation différents (22) ;
la réservation, par le premier noeud d'extrémité, d'une largeur de bande pour le LSP,
puis l'envoi, dans une direction allant du premier noeud d'extrémité au second noeud d'extrémité, d'un message de demande d'établissement de trajet acheminant des informations du LSP à un noeud aval adjacent au premier noeud d'extrémité situé sur le LSP (23) ;
la réception, par un premier noeud intermédiaire, du message de demande d'établissement de trajet (31) ; dans lequel le message de demande d'établissement de trajet achemine des informations d'indication du noeud de conversion de type de commutation déterminées par le premier noeud d'extrémité conformément aux informations de capacité de conversion de type de commutation de repos acquises de chaque noeud dans le réseau ;
la réservation, par le premier noeud intermédiaire, d'une largeur de bande pour le LSP conformément au message de demande d'établissement de trajet (32) ;
la détermination, par le premier noeud intermédiaire et conformément au message de demande d'établissement de trajet, du fait qu'un noeud courant est un noeud de conversion de type de commutation, puis la mise à jour du message de demande d'établissement de trajet conformément à un sous-trajet LSP adjacent ayant un type de commutation unique en aval, et l'envoi, dans une direction allant du premier noeud d'extrémité au second noeud d'extrémité, d'un message de demande d'établissement de trajet mis à jour à un noeud aval adjacent au premier noeud intermédiaire situé sur le LSP (33) ; et
dans lequel la mise à jour du message de demande d'établissement de trajet comprend :
le réglage, par le premier noeud intermédiaire, du type de codage LSP dans le message de demande d'établissement de trajet à un type de codage LSP du sous-trajet LSP adjacent ayant le type de commutation unique en aval du noeud courant, le réglage du type de commutation dans le message de demande d'établissement de trajet à un type de commutation du sous-trajet LSP adjacent ayant le type de commutation unique en aval du noeud courant, et le réglage du paramètre de trafic dans le message de demande d'établissement de trajet à un paramètre de trafic du sous-trajet LSP adjacent ayant le type de commutation unique en aval du noeud courant.

2. Procédé selon la revendication 1, dans lequel l'acquisition, par le premier noeud d'extrémité, des informations de capacité de conversion de type de commutation de repos d'un noeud dans le réseau comprend :
la réception, par le premier noeud d'extrémité, d'informations de capacité de conversion de type de commutation de repos directement configurées de chaque noeud, de manière à acquérir les informations de capacité de conversion de type de commutation de repos de chaque noeud ; ou
la réception, par le premier noeud d'extrémité, d'informations de capacité de conversion de type de commutation de repos de chaque noeud diffusé en inondation dans le réseau par l'intermédiaire d'un protocole de routage, de manière à acquérir les informations de capacité de conversion de type de commutation de repos de chaque noeud.

3. Procédé selon la revendication 1 ou 2, dans lequel les informations du LSP comprennent au moins un objet de demande d'étiquette généralisé, un objet d'itinéraire explicite, un paramètre de trafic et un objet d'attribut LSP pour enregistrer des informations de nouvel indicateur et de largeur de bande d'une charge utile acheminée par le LSP ; le nouvel indicateur indiquant qu'un LSP devant être établi est un LSP combinant différents types de commutation.

4. Procédé selon la revendication 1 ou 2, dans lequel les informations de capacité de conversion de type de commutation de repos comprennent un type de commutation d'entrée, une largeur de bande de repos d'entrée, un type de commutation de sortie et un largeur de bande de repos de sortie.

5. Dispositif de noeud, comprenant :
une unité de réception de message (601), configurée pour recevoir un message de demande d'établissement de trajet, dans lequel le message de demande d'établissement de trajet achemine des informations d'un trajet à commutation d'étiquettes LSP d'un premier noeud d'extrémité à un second noeud d'extrémité ; le LSP est obtenu par le premier noeud d'extrémité au moyen d'un calcul effectué en fonction d'informations de capacité de conversion de type de commutation de repos acquises de chaque noeud dans un réseau, et le LSP comprend au moins deux sous-trajets LSP ayant différents types de commutation ; les informations de capacité de conversion de type de commutation de repos indiquent une largeur de bande de repos satisfaite par chaque noeud et un type de commutation pris en charge par chaque noeud ;
une unité de traitement de largeur de bande (602), configurée pour réserver une largeur de bande pour le LSP conformément au message de demande d'établissement de traj et ;
une unité d'identification de noeud (603), configurée pour déterminer, conformément au message de demande d'établissement de trajet, qu'un noeud courant est un noeud de conversion de type de commutation ; dans lequel le message de demande d'établissement de trajet achemine des informations d'indication du noeud de conversion de type de commutation déterminé par le premier noeud d'extrémité conformément aux informations de capacité de conversion de type de commutation de repos acquises de chaque noeud dans le réseau ;
une unité de mise à jour de message (604), configurée pour mettre à jour le message de demande d'établissement de trajet conformément à un sous-trajet LSP adjacent ayant un type de commutation unique en aval ;
une unité d'envoi de message (605), configurée pour envoyer, dans une direction allant du premier noeud d'extrémité au second noeud d'extrémité, un message de demande d'établissement de trajet mis à jour à un noeud aval adjacent au noeud courant situé sur le LSP ; et
dans lequel l'unité de mise à jour de message (604) est spécifiquement configurée pour régler le type de codage LSP dans le message de demande d'établissement de trajet à un type de codage LSP du sous-trajet LSP adjacent ayant le type de commutation unique en aval du noeud courant, régler le type de commutation dans le message de demande d'établissement de trajet à un type de commutation du sous-trajet LSP adjacent ayant le type de commutation unique en aval du noeud courant, et
régler le paramètre de trafic dans le message de demande d'établissement de trajet à un paramètre de trafic du sous-trajet LSP adjacent ayant le type de commutation unique en aval du noeud courant.

6. Dispositif de noeud selon la revendication 5, dans lequel les informations du LSP comprennent au moins un objet de demande d'étiquette généralisé, un objet d'itinéraire explicite, un paramètre de trafic, et un objet d'attribut LSP pour enregistrer des informations de nouvel indicateur et de largeur de bande d'une charge utile acheminée par le LSP ; le nouvel indicateur indiquant qu'un LSP devant être établi est un LSP combinant différents types de commutation.

7. Dispositif de noeud selon la revendication 5, dans lequel les informations de capacité de conversion de type de commutation de repos comprennent un type de commutation d'entrée, une largeur de bande de repos d'entrée, un type de commutation de sortie et une largeur de bande de repos de sortie.

8. Système d'établissement d'un trajet à commutation d'étiquettes, comprenant un premier dispositif de noeud et au moins un dispositif de noeud selon l'une quelconque des revendications 5 à 7 :
le premier dispositif de noeud étant configuré pour acquérir des informations de capacité de conversion de type de commutation de repos de chaque noeud dans un réseau, dans lequel les informations de capacité de conversion de type de commutation de repos indiquent une largeur de bande de repos satisfaite par chaque noeud et un type de commutation pris en charge par chaque noeud ; calculer,
conformément aux informations de capacité de conversion de type de commutation de repos, destiné à obtenir un trajet à commutation d'étiquettes LSP du premier dispositif de noeud, en tant que premier noeud d'extrémité, à un second noeud d'extrémité, dans lequel le LSP comprend au moins deux sous-trajets LSP ayant différents types de commutation ; réserver une largeur de bande pour le LSP ; et
envoyer, dans une direction allant du premier noeud d'extrémité au second noeud d'extrémité, un message de demande d'établissement de trajet acheminant des informations du LSP à un noeud aval adjacent au premier noeud d'extrémité situé sur le LSP.
